# EUROPEAN PATENT SPECIFICATION

(11) **EP 3 226 407 B1**
(45) Date of publication and mention of the grant of the patent: **23.08.2023**
(21) Application number: 17162695.5
(22) Date of filing: 24.03.2017
(51) Int. Cl.: H02P 25/18

(54) **MOTOR CONTROL DEVICE AND COMPRESSOR**
VERDICHTER UND VORRICHTUNG FÜR EINE MOTORSTEUERUNG
DISPOSITIF DE COMMANDE DE MOTEUR ET COMPRESSEUR

(30) Priority: 28.03.2016 JP 2016063569
(43) Date of publication of application: 04.10.2017
(73) Proprietor: Mitsubishi Heavy Industries, Ltd., Minato-ku Tokyo (JP)
(72) Inventor: TAKADA, Junichi, TOKYO (JP); SHIMIZU, Kenji, TOKYO (JP); ISOBE, Shinichi, TOKYO (JP); SATO, Hajime, TOKYO (JP); TAKASU, Yogo, TOKYO (JP); KIMATA, Yoshiyuki, TOKYO (JP)
(74) Representative: Cabinet Beau de Loménie

(56) References cited:
- WO-A1-2007/074081
- CN-B- 103 281 034
- JP-A- 2008 182 783
- JP-A- 2012 227 979
- JP-B2- 5 276 638
- JP-B2- 5 276 638
- US-A1- 2014 239 876

## Description

### BACKGROUND OF THE INVENTION

### Field of the Invention

The present invention relates to a motor control device and a compressor.

### Description of Related Art

A permanent magnet synchronous motor with high efficiency and high output is widely used for a hermetic type compressor mounted on an air conditioner or the like, and an inverter is used for driving the motor. In the permanent magnet synchronous motor, an induced voltage (counter electromotive force) proportional to the number of turns of the stator winding × the rotational speed of the motor is generated. Therefore, when the motor is rotated at high-speed, field-weakening control for suppressing the voltage induced by an inverter is performed.

At the time of the field-weakening control, since it is necessary to electrically conduct a current that does not contribute to the torque of the motor, the current required by the motor relatively increases and the efficiency (the ratio of the torque to the current) decreases as compared to a case where the field-weakening control is not performed. Also, in order to suppress the efficiency reduction caused by the field-weakening control, a reduction in the number of turns may be considered. However, when the number of turns is reduced, because the current required to obtain an equivalent torque increases, the efficiency at the time of low-speed rotation deteriorates.

Regarding such a problem, by adopting a motor (a so-called winding changeover motor) to which an external switch is connected to be switchable to a high turn (high number of turns) at low-speed rotation and a low turn (low number of turns) at high-speed rotation, it is possible to achieve high efficiency in a wide operation range and expansion of operation range (see, for example, Japanese Patent No. 5276638 and Japanese Unexamined Patent Application, First Publication Nos. 2008-022665 and 2008-182783). Documents CN 103 281 034 B, JP 2012 227979 A, WO 2007/074081 A1, US 2014/239876 A1, JP 5 276638 B2 and JP 2008 182783 A are also known and describe an electric motor which can be operated at variable speeds.

### SUMMARY OF THE INVENTION

For example, in Japanese Patent No. 5276638 and Japanese Unexamined Patent Application, First Publication No. 2008-022665, a mechanical switch (a switch of type mechanically switching a contact by electric conduction) is used as a winding changeover unit. However, because structural wear and deterioration are caused in the mechanical switch at the contact and the movable part, it is difficult to obtain higher reliability (durability).

Further, as described in Japanese Unexamined Patent Application, First Publication No. 2008-182783, the problem relating to the reliability can be solved by utilizing a semiconductor switch as the winding changeover unit. However, when the semiconductor switch is used as the winding changeover unit, because it is necessary to combine semiconductor devices such as a diode bridge made up of a plurality of diodes and a transistor serving as a changeover switch, there is a large conduction loss which occurs when a current flows in the semiconductor switch.

An object of the present invention is to provide a motor control device and a compressor which are capable of suppressing efficiency reduction caused by conduction loss, while obtaining high reliability.

The invention is to be found in the appended claims.

According to an aspect of the present invention, there is provided a motor control device which switches the number of turns of three motor windings incorporated in a three-phase motor operating with three-phase AC power, the motor control device including: a low turn side switch connected between a first neutral point of the three-phase motor and a low turn side connection point of at least two of the three motor windings; and a high turn side switch connected between a second neutral point of the three-phase motor and a high turn side connection point of at least two of the three motor windings, wherein the low turn side switch and the high turn side switch are bidirectional switches made up of semiconductor devices.

According to an aspect of the present invention, the above-mentioned motor control device further includes a low turn side short-circuit line which short-circuits between the first neutral point and the low turn side connection point in one of the three motor windings; and a high turn side short-circuit line which short-circuits between the second neutral point and the high turn side connection point in one of the three motor windings.

Further, according to an aspect of the present invention, the bidirectional switch may be a triac.

Further, according to an embodiment of the present invention, the bidirectional switch may have two reverse blocking IGBT elements connected in parallel to each other.

Also, according to an aspect of the present invention, there is provided a compressor including the aforementioned motor control device; and the three-phase motor.

According to the motor control device and the compressor, it is possible to suppress the efficiency reduction caused by the conduction loss, while obtaining high reliability.

### BRIEF DESCRIPTION OF THE DRAWINGS

FIG. 1 is a diagram showing an overall configuration of a motor control device according to a first embodiment.
FIG. 2 is a diagram showing a circuit configuration of a bidirectional switch according to the first embodiment.
FIG. 3 is a diagram showing a circuit configuration of a bidirectional switch according to a modified example of the first embodiment.

### DETAILED DESCRIPTION OF THE INVENTION

### <First Embodiment>

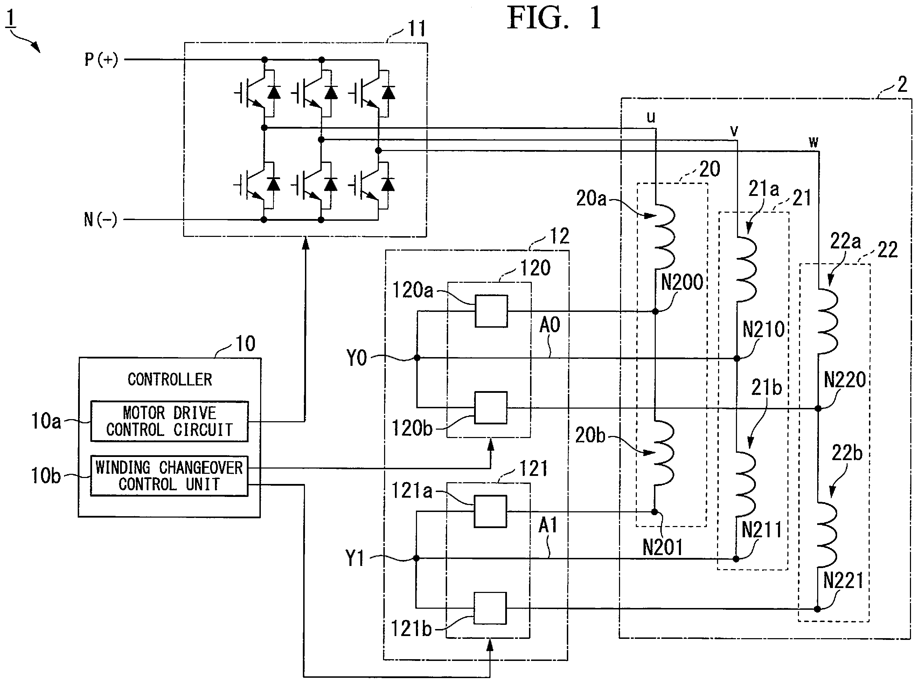

Hereinafter, a motor control device according to a first embodiment will be described in detail with reference to FIGS. 1 to 2.

### (Overall Configuration of Motor Control Device)

FIG. 1 is a diagram showing an overall configuration of the motor control device according to the first embodiment.

A motor control device 1 shown in FIG. 1 controls a three-phase motor 2 that operates based on a three-phase AC power. The motor control device 1 according to the present embodiment and the three-phase motor 2 are mounted on a compressor which is mounted on an air conditioner or the like.

Further, as shown in FIG. 1, the three-phase motor 2 has three built-in motor windings (a u-phase motor winding 20, a v-phase motor winding 21 and a w-phase motor winding 22) corresponding to each of a u-phase, a v-phase and a w-phase of three-phase AC power. The three-phase motor 2 is a so-called Y-connected three-phase motor, and the u-phase motor winding 20, the v-phase motor winding 21 and the w-phase motor winding 22 are connected to one of the neutral point Y0 or the second neutral point Y 1 through a winding changeover circuit 12 which will be described later .

As shown in FIG. 1, the motor control device 1 includes a controller 10, an inverter circuit 11 and a winding changeover circuit 12.

The controller 10 is a processor IC (so-called microcomputer) that governs the overall operation of the motor control device 1. Specifically, the controller 10 operates in accordance with a program prepared in advance, thereby exerting the functions as a motor drive control unit 10a and a winding changeover control unit 10b. The functions of the motor drive control unit 10a and the winding changeover control unit 10b will be described later.

The inverter circuit 11 includes a plurality of switching elements (e.g., IGBT (Insulated Gate Bipolar Transistor), etc.). The inverter circuit 11 converts a DC power, which is applied from a rectifier circuit (not shown) to a positive power supply line P and a negative power supply line N, into AC power for driving the three-phase motor 2.

As shown in FIG. 1, the inverter circuit 11 outputs three-phase AC power including the u-phase, the v-phase and the w-phase. The output three-phase AC power is received by the three-phase motor 2, and contributes to the rotation driving of the three-phase motor 2.

The winding changeover circuit 12 is a circuit capable of switching the number of turns of motor windings (the u-phase motor winding 20, the v-phase motor winding 21 and the w-phase motor winding 22) which are built into the three-phase motor 2. Specifically, as shown in FIG. 1, the winding changeover circuit 12 has two low turn side switches 120a and 120b and two high turn side switches 121a and 121b.

In the following description, the two low turn side switches 120a and 120b will also be collectively referred to as a "low turn side switch 120". Also, the two high turn side switches 121a and 121b will also be collectively referred to as a "high turn side switch 121".

The low turn side switch 120 is connected between the first neutral point Y0 as one of the neutral points of the three-phase motor 2 and the low turn side connection points N200 and N220 of the two motor windings (the u-phase motor winding 20 and the w-phase motor winding 22) of the three motor windings.

More specifically, as shown in FIG. 1, the low turn side switch 120a is connected between the first neutral point Y0 and the low turn side connection point N200 on the u-phase motor winding 20. Further, the low turn side switch 120b is connected between the first neutral point Y0 and the low turn side connection point N220 on the w-phase motor winding 22.

Further, no switch or the like is provided between the first neutral point Y0 and the low turn side connection point N210 of one (the v-phase motor winding 21) of the three motor windings, and the first neutral point Y0 and the low turn side connection point N210 are short-circuited by a low turn side short-circuit line A0.

Here, the low turn side connection point N200 is a connection point provided in the u-phase motor winding 20 at a location passing through the first winding portion 20a from the inverter circuit 11. Further, the low turn side connection point N210 is a connection point provided in the v-phase motor winding 21 at a location passing through the first winding portion 21a from the inverter circuit 11. The low turn side connection point N220 is a connection point provided in the w-phase motor winding 22 at a location passing through the first winding portion 22a from the inverter circuit 11.

The high turn side switch 121 is connected between a second neutral point Y1 as another neutral point different from the first neutral point Y0 of the three-phase motor 2 and the high turn side connection points N201 and N221 of the two motor windings (the u-phase motor winding 20 and the w-phase motor winding 22) of the three motor windings.

More specifically, as shown in FIG. 1, the high turn side switch 121a is connected between the second neutral point Y1 and the high turn side connection point N201 on the u-phase motor winding 20. The high turn side switch 121b is connected between the second neutral point Y1 and the high turn side connection point N221 on the w-phase motor winding 22.

Further, no switch or the like is provided between the second neutral point Y1 and the high turn side connection point N211 of one (the v-phase motor winding 21) of the three motor windings, and the second neutral point Y1 and the high turn side connection point N211 are short-circuited by the high turn side short-circuit line A1.

Here, the high turn side connection point N201 is a connection point provided in the u-phase motor winding 20 at a location passing through both of the first winding portion 20a and the second winding portion 20b from the inverter circuit 11. Further, the high turn side connection point N211 is a connection point provided in the v-phase motor winding 21 at a location passing through both of the first winding portion 21a and the second winding portion 21b from the inverter circuit 11. Further, the high turn side connection point N221 is a connection point provided in the w-phase motor winding 22 at a location passing through both of the first winding portion 22a and the second winding portion 22b from the inverter circuit 11.

Next, the function of the controller 10 will be described.

The motor drive control unit 10a of the controller 10 outputs, for example, a control signal based on a well-known PWM (Pulse Width Modulation) control toward the inverter circuit 11. The motor drive control unit 10a suitably outputs a control signal corresponding to the operation command (for the compressor) from a host device, thereby rotationally driving the three-phase motor 2 as desired.

When the three-phase motor 2 is rotated at a rotational speed lower than a predetermined determination threshold (hereinafter, also referred to as "at the time of low-speed operation") in accordance with the operation command, the winding changeover control unit 10b of the controller 10 performs the control of turning the two low turn side switches 120 "OFF" and turning the two high turn side switches 121 "ON" with respect to the winding changeover circuit 12. Further, when the three-phase motor 2 is rotated at a high rotational speed equal to or higher than a predetermined determination threshold (hereinafter, also referred to as "at the time of high-speed operation") in accordance with the operation command, the winding changeover control unit 10b performs the control of turning the two low turn side switches 120 "ON" and turning the two high turn side switches 121 "OFF" with respect to the winding changeover circuit 12.

Here, the two low turn side switches 120 and the two high turn side switches 121 are bidirectional switches which are made up of a single semiconductor device having the same structure and characteristics. Hereinafter, the bidirectional switch forming the two low turn side switches 120 and the two high turn side switches 121 will be described.

### (Configuration of Bidirectional Switch)

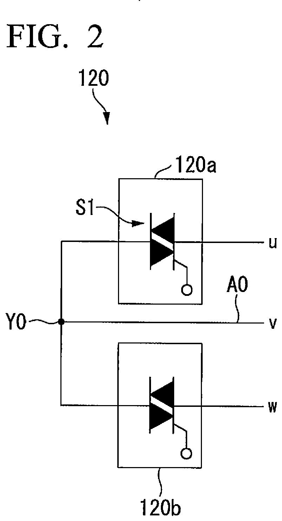

FIG. 2 is a diagram showing the configuration of the bidirectional switch according to the first embodiment.

As shown in FIG. 2, a single triac S 1 is used for the low turn side switch 120. The triac S1 is a generally widely known triac, and is a semiconductor device in which two thyristors are combined and integrated with each other. When the triac S1 is set to the "ON" state by the control signal from the controller 10 (FIG. 1), it is possible to allow the current to flow in both directions (from the first neutral point Y0 to each motor winding and from each motor winding 1 to the neutral point Y0). Further, the triac S1 has a small resistance component and therefore has a small conduction loss.

In the present embodiment, since the two high turn side switches 121 have the same configuration as that of the low turn side switch 120 shown in FIG. 2, they will not be shown.

### (Operation and Effect)

As described above, the two low turn side switches 120 are connected between the first neutral point Y0 of the three-phase motor 2 and each of the low turn side connection points N200 and N210, and the two high turn side switches 121 are connected between the second neutral point Y1 of the three-phase motor 2 and each of the high turn side connection points N201 and N202. Further, the low turn side switch 120 and the high turn side switch 121 are triacs S1 (bidirectional switches made up of semiconductor devices).

Here, according to the aforementioned aspect, in the low-speed operation, the two low turn side switches 120 are turned "OFF" by the control signal from the winding changeover control unit 10b. As a result, the connection between the first neutral point Y0 and the low turn side connection point N200 of the u-phase motor winding 20, and the connection between the first neutral point Y0 and the low turn side connection point N220 of the w-phase motor winding 22 are opened.

Then, all of the AC current between the low turn side connection point N200 and the low turn side connection point N210 passing through the first neutral point Y0, the AC current between the low turn side connection point N210 and the low turn side connection point N220 passing through the first neutral point Y0, and the AC current between the low turn side connection point N220 and the low turn side connection point N200 passing through the first neutral point Y0 are shut off.

Furthermore, at the time of the low-speed operation, the two high turn side switches 121 are turned "ON" by the control signal from the winding changeover control unit 10b. Thus, the connection between the second neutral point Y1 and the high turn side connection point N201 of the u-phase motor winding 20, and the connection between the second neutral point Y1 and the high turn side connection point N221 of the w-phase motor winding 22 are short-circuited.

Then, all of the AC current between the high turn side connection point N201 and the high turn side connection point N211 passing through the second neutral point Y1, the AC current between the high turn side connection point N211 and the high turn side connection point passing N221 through the second neutral point Y1, and the AC current between the high turn side connection point N221 and the high turn side connection point N201 passing through the second neutral point Y1 are allowed to flow.

As a result, in the u-phase motor winding 20, the current flows through both of a first winding portion 20a and a second winding portion 20b, and torque corresponding to the total number of turns of the first winding portion 20a and the second winding portion 20b is generated. Similarly, in the v-phase motor winding 21, torque corresponding to the total number of turns of a first winding portion 21a and a second winding portion 21b is generated. Further, in the w-phase motor winding 22, torque corresponding to the total number of turns of a first winding portion 22a and a second winding portion 22b is generated.

At the time of high-speed operation, the two low turn side switches 120 are turned "ON" by the control signal from the winding changeover control unit 10b. As a result, the connection between the first neutral point Y0 and the low turn side connection point N200 of the u-phase motor winding 20, and the connection between the first neutral point Y0 and the low turn side connection point N220 of the w-phase motor winding 22 are short-circuited.

Then, all of the AC current between the low turn side connection point N200 and the low turn side connection point N210 passing through the first neutral point Y0, the AC current between the low turn side connection point N210 and the low turn side connection point N220 passing through the first neutral point Y0, and the AC current between the low turn side connection point N220 and the low turn side connection point N200 passing through the first neutral point Y0 are allowed to flow.

Furthermore, at the time of high-speed operation, the two high turn side switches 121 are turned "OFF" by the control signal from the winding changeover control unit 10b. Thus, the connection between the second neutral point Y1 and the high turn side connection point N201 of the u-phase motor winding 20, and the connection between the second neutral point Y1 and the high turn side connection point N221 of the w-phase motor winding 22 are opened.

Then, all of the AC current between the high turn side connection point N201 and the high turn side connection point N211 passing through the second neutral point Y1, the AC current between the high turn side connection point N211 and the high turn side connection point N221 passing through the second neutral point Y1, and the AC current between the high turn side connection point N221 and the high turn side connection point N201 passing through the second neutral point Y1 are shut off.

As a result, in the u-phase motor winding 20, the current flows through only the first winding portion 20a, and a torque corresponding to the number of turns of only the first winding portion 20a is generated. Similarly, in the v-phase motor winding 21, a torque corresponding to the number of turns of only the first winding portion 21a is generated. Furthermore, in the w-phase motor winding 22, a torque corresponding to the number of turns of only the first winding portion 22a is generated. However, since the number of turns of each motor winding contributing to the generation of torque is small, the counter electromotive force corresponding to the rotational speed is reduced.

As described above, according to the motor control device 1 of this embodiment, by increasing the number of turns of the motor windings at the time of low-speed operation and by reducing the number of turns of the motor windings at the time of high-speed operation, it is possible to achieve a high efficiency in a wide operation range.

Further, in the present embodiment, all of the low turn side switch 120 and the high turn side switch 121 constituting the winding changeover circuit 12 are made up of the semiconductor device (triac S1), and the conduction/opening of bidirectional current (AC current) are performed by the semiconductor device. This makes it possible to obtain higher reliability (durability) than in a case of using a mechanical switch.

Further, in the present embodiment, as shown in FIG. 2, each of the low turn side switch 120 and the high turn side switch 121 is made up of only a single semiconductor device (triac S1). Thus, for example, the AC current flowing between the low turn side connection point N200 and the low turn side connection point N210 through the first neutral point Y0 passes through only the single triac S1 (the low turn side switch 120a). Similarly, the AC current flowing between the low turn side connection point N210 and the low turn side connection point N220 through the first neutral point Y0 also passes through only the single triac S1 (the low turn side switch 120b). Further, the AC current flowing between the low turn side connection point N220 and the low turn side connection point N200 through the first neutral point Y0 passes through the two triacs S 1 (the low turn side switch 120a and the low turn side switch 120b).

In this way, according to the motor control device 1 of the present embodiment, the AC current flowing through the three-phase motor 2 only passes through at most two semiconductor devices. Therefore, since it is possible to reduce the number of semiconductor devices through which the motor current passes, it is possible to reduce the conduction loss which occurs in the winding changeover circuit 12.

In particular, in the present embodiment, the low turn side short-circuit line A0 short-circuits the first neutral point Y0 and the low turn side connection point N210 in one (the v-phase motor winding 21) of the three motor windings. Also, the high turn side short-circuit line A1 short-circuits the second neutral point Y1 and the high turn side connection point N211 in one (the v-phase motor winding 21) of the three motor windings. As a result, since the AC current flowing through the low turn side short-circuit line A0 and the high turn side short-circuit line A1 passes through only one semiconductor device, it is possible to further reduce conduction loss.

In addition, since the number of constituent elements of the winding changeover circuit 12 can be reduced, it is possible to save space and reduce cost.

### (Modified Example)

Although the motor control device 1 according to the first embodiment has been described in detail above, the specific aspect of the motor control device 1 is not limited to the above-described aspect, and various design modifications may be made.

For example, the motor control device 1 according to the modified example of the first embodiment further may have a low turn side switch 120 made up of a semiconductor device (e.g., the triac S1) between the first neutral point Y0 and the low turn side connection point N210 of the v-phase motor winding 21. That is, the low turn side switch 120 may be connected to all of the u-phase motor winding 20, the v-phase motor winding 21 and the w-phase motor winding 22.

Further, the motor control device 1 may further have a high turn side switch 121 made up of a semiconductor device between the second neutral point Y1 and the high turn side connection point N211 in the v-phase motor winding 21. That is, the high turn side switch 121 may be connected to all of the u-phase motor winding 20, the v-phase motor winding 21 and the w-phase motor winding 22.

Even in this case, since the AC current flowing through the three-phase motor 2 passes through only the two semiconductor devices, it is possible to reduce the conduction loss which occurs in the winding changeover circuit 12.

Further, in the motor control device 1 according to the first embodiment, although the description has been given of a case where the low turn side switch 120 is connected to the u-phase motor winding 20 and the w-phase motor winding 22, and the low turn side short-circuit line A0 is connected to the v-phase motor winding 21, other embodiments are not limited thereto.

For example, an aspect in which the low turn side switch 120 is connected to the u-phase motor winding 20 and the v-phase motor winding 21, and the low turn side short-circuit line A0 is connected to the w-phase motor winding 22, or an aspect in which the low turn side switch 120 is connected to the v-phase motor winding 21 and the w-phase motor winding 22, and the low turn side short-circuit line A0 is connected to the u-phase motor winding 20 may be adopted.

The same also applies to the high turn side switch 121 and the high turn side short-circuit line A1.

Further, in the motor control device 1 according to the first embodiment, the description has been given of a case where the triac S1 is used for the low turn side switch 120 and the high turn side switch 121. However, other embodiments are not limited thereto.

### <Second Embodiment>

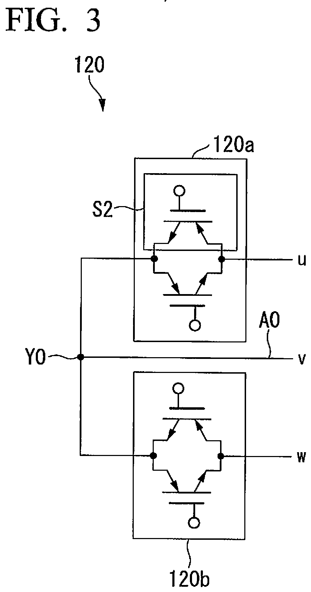

Next, a motor control device according to a second embodiment will be described in detail with reference to FIG. 3.

### (Configuration of Bidirectional Switch)

FIG. 3 is a diagram showing the configuration of the bidirectional switch according to the second embodiment.

As shown in FIG. 3, the low turn side switch 120 is formed by connecting two reverse blocking insulated gate bipolar transistors (RB-IGBT) S2 in parallel. When the reverse blocking IGBT element S2 enters the "ON" state due the control signal from the controller 10 (FIG. 1), one reverse blocking IGBT element S2 causes the current to flow from the first neutral point Y0 toward each motor winding, and the other reverse blocking IGBT element S2 causes the current to flow from each motor winding toward the first neutral point Y0.

Further, in the present embodiment, since the two high turn side switches 121 (FIG. 1) have the same configuration as those of the low turn side switch 120 shown in FIG. 3, they are not shown.

In this way, in this embodiment, as shown in FIG. 3, each of the low turn side switch 120 and the high turn side switch 121 has two semiconductor devices (reverse blocking IGBT elements S2) connected in parallel to each other. Then, for example, the AC current flowing between the low turn side connection point N200 and the low turn side connection point N210 through the first neutral point Y0 passes through only the single reverse blocking IGBT element S2. Similarly, the AC current flowing between the low turn side connection point N210 and the low turn side connection point N220 through the first neutral point Y0 also passes through only the single reverse blocking IGBT element S2. Further, the AC current flowing between the low turn side connection point N220 and the low turn side connection point N200 through the first neutral point Y0 passes through the two reverse blocking IGBT elements S2.

In this way, in the second embodiment, the AC current flowing through the three-phase motor 2 also passes through only at most two semiconductor devices. Therefore, since it is possible to reduce the number of semiconductor devices through which the motor current passes, it is possible to reduce the conduction loss which occurs in the winding changeover circuit 12.

When the low turn side switch 120 and the high turn side switch 121 are constituted by the reverse blocking IGBT element S2, the switching characteristics are superior as compared to the triac S1 of the first embodiment (triac S1). That is, the response from the input of the ON/OFF control signal to the flow or shut-off of the AC current at the low turn side switch 120 and the high turn side switch 121 is fast. Therefore, according to the motor control device 1 of the second embodiment, it is possible to change the number of turns, without requiring a complicated switching control.

While several embodiments of the invention have been described, these embodiments are provided as examples and are not intended to limit the scope of the invention. These embodiments can be implemented in various other forms, and various omissions, substitutions, and changes can be made within the scope of the claims.

## Claims

1. A motor control device configured to switch the number of turns of three motor windings (20, 21, 22) incorporated in a three-phase motor (2) operating with three-phase AC power, the motor control device comprising:
a low turn side switch (120) connected between a first neutral point (Y0) of the three-phase motor (2) and a low turn side connection point (N200, N220) of two (20, 22) of the three motor windings; and
a high turn side switch (121) connected between a second neutral point (Y1) of the three-phase motor (2) and a high turn side connection point (N201, N221) of said two (20, 22) of the three motor windings;
wherein the low turn side switch (120) and the high turn side switch (121) are bidirectional switches made up of semiconductor devices,
**characterized by** further comprising
a low turn side short-circuit line (A0) configured to short-circuit between the first neutral point (Y0) and the low turn side connection point (N210) in one (21) of the three motor windings which is different from said two (20, 22) of the three motor windings; and
a high turn side short-circuit line (A1) configured to short-circuit between the second neutral point (Y1) and the high turn side connection point (N211) in one (21) of the three motor windings which is different from said two (20, 22) of the three motor windings
the low turn side short-circuit line (A0) is drawn from the low turn side connection point (N210) on the motor winding (21) to the first neutral point (Y0) outside the three-phase motor (2), and
the high turn side short-circuit line (A1) is drawn from the high turn side connection point (N211) on the motor winding (21) to the second neutral point (Y1) outside the three-phase motor (2).

2. The motor control device according to claim 1, wherein the bidirectional switch is a triac (S1).

3. The motor control device according to claim 1 or 2, wherein the bidirectional switch has two reverse blocking IGBT elements (S2) connected in parallel to each other.

4. A compressor comprising a three-phase motor (2), and the motor control device according to any one of claims 1 to 3.

## Patentansprüche

1. Motorsteuervorrichtung, die dazu ausgestaltet ist, die Anzahl von Windungen von drei Motorwicklungen (20, 21, 22) zu schalten, die in einem Drehstrommotor (2) eingebaut sind, der mit Dreiphasenwechselstrom arbeitet, wobei die Motorsteuervorrichtung umfasst:
einen Seitenschalter für eine geringe Anzahl von Windungen (120), der zwischen einem ersten Neutralpunkt (Y0) des Drehstrommotors (2) und einem Seitenanschlusspunkt für eine geringe Anzahl von Windungen (N200, N220) von zwei (20, 22) der drei Motorwicklungen verbunden ist, und
einen Seitenschalter für eine hohe Anzahl von Windungen (121), der zwischen einem zweiten Neutralpunkt (Y1) des Drehstrommotors (2) und einem Seitenanschlusspunkt für eine hohe Anzahl von Windungen (N201, N221) von den zwei (20, 22) der drei Motorwicklungen verbunden ist,
wobei der Seitenschalter für eine geringe Anzahl von Windungen (120) und der Seitenschalter für eine hohe Anzahl von Windungen (121) bidirektionale Schalter sind, die aus Halbleitervorrichtungen zusammengesetzt sind,
**dadurch gekennzeichnet, dass** sie ferner umfasst
eine Seitenkurzschlussleitung für eine geringe Anzahl von Windungen (A0), die dazu ausgestaltet ist, zwischen dem ersten Neutralpunkt (Y0) und dem Seitenanschlusspunkt für eine geringe Anzahl von Windungen (N210) in einer (21) von den drei Motorwicklungen kurzzuschließen, die sich von den zwei (20, 22) der drei Motorwicklungen unterscheidet, und
eine Seitenkurzschlussleitung für eine hohe Anzahl von Windungen (A1), die dazu ausgestaltet ist, zwischen dem zweiten Neutralpunkt (Y1) und dem Seitenanschlusspunkt für eine hohe Anzahl von Windungen (N211) in einer (21) von den drei Motorwicklungen kurzzuschließen, die sich von den zwei (20, 22) der drei Motorwicklungen unterscheidet,
wobei die Seitenkurzschlussleitung für eine geringe Anzahl von Windungen (A0) von dem Seitenanschlusspunkt für eine geringe Anzahl von Windungen (N210) an der Motorwicklung (21) zu dem ersten Neutralpunkt (Y0) außerhalb des Drehstrommotors (2) gezogen ist, und
wobei die Seitenkurzschlussleitung für eine hohe Anzahl von Windungen (A1) von dem Seitenanschlusspunkt für eine hohe Anzahl von Windungen (N211) an der Motorwicklung (21) zu dem zweiten Neutralpunkt (Y1) außerhalb des Drehstrommotors (2) gezogen ist.

2. Motorsteuervorrichtung nach Anspruch 1, wobei der bidirektionale Schalter ein Triac (S1) ist.

3. Motorsteuervorrichtung nach Anspruch 1 oder 2, wobei der bidirektionale Schalter zwei rückwärtssperrende IGBT-Elemente (S2) aufweist, die parallel zueinander geschaltet sind.

4. Verdichter, umfassend einen Drehstrommotor (2) und die Motorsteuervorrichtung nach einem der Ansprüche 1 bis 3.

## Revendications

1. Dispositif de commande de moteur configuré pour commuter le nombre de spires de trois enroulements de moteur (20, 21, 22) incorporés dans un moteur triphasé (2) fonctionnant avec du courant alternatif triphasé, le dispositif de commande de moteur comprenant :
un commutateur du côté nombre de tours inférieur (120) connecté entre un premier point neutre (Y0) du moteur triphasé (2) et un point de connexion du côté nombre de tours inférieur (N200, N220) de deux (20, 22) des trois enroulements de moteur ; et
un commutateur du côté nombre de tours supérieur (121) connecté entre un second point neutre (Y1) du moteur triphasé (2) et un point de connexion du côté nombre de tours supérieur (N201, N221) desdits deux (20, 22) des trois enroulements de moteur ;
dans lequel le commutateur du côté nombre de tours inférieur (120) et le commutateur du côté de la spire supérieure (121) sont des commutateurs bidirectionnels composés de dispositifs semi-conducteurs,
**caractérisé en ce qu'**il comprend en outre :
une ligne de court-circuit du côté nombre de tours inférieur (A0) configurée pour effectuer un court-circuit entre le premier point neutre (Y0) et le point de connexion du côté nombre de tours inférieur (N210) dans l'un (21) des trois enroulements de moteur qui est différent desdits deux (20, 22) des trois enroulements de moteur ; et
une ligne de court-circuit du côté nombre de tours supérieur (A1) configurée pour effectuer un court-circuit entre le second point neutre (Y1) et le point de connexion du côté nombre de tours supérieur (N211) dans l'un (21) des trois enroulements de moteur qui est différent desdits deux (20, 22) des trois enroulements de moteur,
la ligne de court-circuit du côté nombre de tours inférieur (A0) est tirée depuis le point de connexion du côté nombre de tours inférieur (N210) sur l'enroulement de moteur (21) jusqu'au premier point neutre (Y0) hors du moteur triphasé (2), et
la ligne de court-circuit du côté nombre de tours supérieur (A1) est tirée depuis le point de connexion du côté nombre de tours supérieur (N211) sur l'enroulement de moteur (21) jusqu'au second point neutre (Y1) hors du moteur triphasé (2).

2. Dispositif de commande de moteur selon la revendication 1, dans lequel le commutateur bidirectionnel est un triac (51).

3. Dispositif de commande de moteur selon la revendication 1 ou 2, dans lequel le commutateur bidirectionnel a deux éléments IGBT de blocage inverse (S2) connectés en parallèle l'un par rapport à l'autre.

4. Compresseur comprenant un moteur triphasé (2), et le dispositif de commande de moteur selon l'une quelconque des revendications 1 à 3.
